# EUROPÄISCHE PATENTSCHRIFT

(11) **EP 3 709 120 B1**
(45) Veröffentlichungstag und Bekanntmachung des Hinweises auf die Patenterteilung: **27.04.2022**
(21) Anmeldenummer: 20158290.5
(22) Anmeldetag: 19.02.2020
(51) Int. Cl.: G05D 23/02, F24D 19/00

(54) **REGLERBOX FÜR HEIZUNGS- ODER KÜHLANLAGEN**
CONTROL BOX FOR HEATING OR COOLING INSTALLATIONS
BOÎTIER DE RÉGULATEUR POUR INSTALLATIONS DE CHAUFFAGE OU DE REFROIDISSEMENT

(30) Priorität: 07.03.2019 DE 102019105750
(43) Veröffentlichungstag der Anmeldung: 16.09.2020
(73) Patentinhaber: Oventrop GmbH & Co. KG, 59939 Olsberg (DE)
(72) Erfinder: Giersch, Marina, 59939 Olsberg (DE); Wilmes, Guido, 59939 Olsberg (DE); Wundling, Dirk, 59939 Olsberg (DE)
(74) Vertreter: Köchling, Conrad-Joachim

(56) Entgegenhaltungen:
- EP-B1- 2 876 339
- WO-A2-2005/083861
- DE-B3- 10 312 366
- DE-B3-102004 058 353
- DE-U1-202011 108 342

## Beschreibung

Die Erfindung betrifft eine Reglerbox mit einem einseitig offenen Wandeinbaukasten und einem darin verbauten Ventil für Heizungs- oder Kühlanlagen, einem auf das Ventil montierten Thermostaten, der eine Oberbaugruppe, bestehend aus einer Abdeckung und einem Bedienteil, und eine Unterbaugruppe, bestehend aus einem Weggeber mit Justier- und Befestigungsmitteln, aufweist, wobei eine auf den Wandeinbaukasten aufsteckbare Abdeckung mit Bedienteil die Oberbaugruppe des Thermostaten bildet und der Weggeber mit Justier- und Befestigungsmitteln die Unterbaugruppe bildet, wobei beide Baugruppen bezogen auf die Raumachse z des Wandeinbaukastens zueinander verschiebbar sind und durch das Zusammenführen der Oberbaugruppe auf die Unterbaugruppe sowohl ein funktionsfähiger Thermostat gebildet ist, als auch der Abstand zwischen Abdeckung und Wandeinbaukasten für einen Ausgleich der Einbautiefe einstellbar ist.

Insbesondere betrifft die Erfindung eine Reglerbox für Heizungs- oder Kühlanlagen mit einem einseitig offenen Wandeinbaukasten und einem darin verbauten Thermostatventil, das sich aus einem einstellbaren Thermostaten und einem Ventil zusammensetzt, wobei das Ventil einen Zu- und Ablaufanschluss für den Einbau in eine Vor- oder Rücklaufleitung eines Strömungskreises einer Heizungs- oder Kühlanlageanlage aufweist, wobei der mit dem Ventil verbundene Thermostat zur Regelung der Raumtemperatur oder zur Regelung der Temperatur des durch das Ventil fließenden Mediums vorgesehen ist, wobei die offene Seite des Wandeinbaukasten durch eine relativ zum Wandeinbaukasten verstellbaren Abdeckung verschlossen ist, wobei die Abdeckung eine Öffnung aufweist, aus der ein Bedienteil des Thermostaten herausragt, wobei das Bedienteil eine drehbare mit der Abdeckung verbundene und eine mit dem Ventil verbundene Komponente aufweist, wobei die drehbare Komponente zum Beispiel eine Sollwertskala oder - markierung aufweist, die mit einer Sollwertmarkierung oder -Scala der mit dem Ventil fest verbundenen Komponente korrespondiert. Die Erfindung betrifft auch Wandeinbaukästen, bei denen die Sollwertskala oder die -markierung auf der drehbaren Komponente des Bedienteiles mit einer Sollwertmarkierung oder -skala auf der Abdeckung korrespondiert.

Solche Reglerboxen, bestehend aus Wandeinbaukästen und Thermostatventilen für Heizungs- oder Kühlanlagen, sind aus dem Stand der Technik bekannt. Sie werden z.B. für die dezentrale Regelung von Fußbodenheizungen in den zu beheizenden Räumen eingesetzt. An dem aus der Abdeckung herausragenden Bedienteil des Thermostaten wird die gewünschte Raum- oder Mediumtemperatur eingestellt, wobei an dem Bedienteil ein Wert auf der Sollwertskala der Sollwertmarkierung oder umgekehrt zugeordnet werden kann.

Beim Einbau der Montagebox in die Wand, der meistens während der Rohbauphase des Gebäudes erfolgt, muss wegen späterer Wandaufbauten, wie z.B. Putz, Wandverkleidungen oder Fliesen auf die Einbautiefe geachtet werden. Wird dieses nicht getan oder der spätere Wandaufbau liegt noch gar nicht fest, so ragt möglicherweise das Bedienteil des Thermostaten für eine Sollwerteinstellung oder Sollwertablesung zu weit oder nicht mehr weit genug aus der Öffnung der Abdeckung heraus, wobei einerseits die Abdeckung nicht mit der Wandoberfläche abschließt, andererseits die Montagebox mit Ventil zu kurz oder zu tief in der Wand eingebaut ist. Aber nicht nur eine falsche Einbautiefe stellt eine Fehlerursache dar, auch ein Verdrehen und/oder ein Verkanten der Montagebox horizontal und/oder vertikal ist möglich. Dies führt ebenfalls dazu, dass die Abdeckung nicht mehr bündig an der Wandoberfläche anliegt und die Drehachse des Bedienteiles des Thermostaten nicht mehr idealerweise lotrecht zur Wandoberfläche ausgerichtet sind.

Bekannte Lösungen zum zuvor beschriebenen Problem besitzen eine Ausgleichsmechanik zwischen der Abdeckung und der Montagebox, um einen Tiefenausgleich und/oder eine Planparallelität der Abdeckung zur Wandoberfläche wiederherzustellen und die Kanten der Abdeckung wieder in eine senkrechte bzw. waagerechte Lage zu bringen. Es sind auch Lösungen im Markt bekannt, bei denen bezüglich des Tiefenausgleichs Verlängerungselemente zwischen Ventil und Thermostat montiert werden.

Diese Lösungen weisen den Nachteil auf, dass einerseits die Montage der Abdeckung sehr aufwendig ist und/oder durch fest zwischen dem Thermostaten und dem Ventil zusätzlich montierte Verbindungselemente behindert ist, andererseits bei verdreht oder verkantet eingebautem Wandeinbaukasten der drehbare Bedienteil des Thermostaten den Aufnahmebereich in der Abdeckung nicht symmetrisch durchgreift. Außerdem korrespondiert dann der Einstellbereich des Thermostaten nicht mit der Sollwertmarkierung auf der auf den Wandeinbaukasten aufgesteckten und zur Wand ausgerichteten Abdeckung.

Somit ist es mit den bekannten Lösungen nicht möglich, bei einem Wandeinbaukasten, der um mindestens zwei von drei Raumachsen verdreht in eine Wand eingebaut ist und der zudem zu kurz oder zu tief in die Wand angesetzt sein kann, die Abdeckung mit dem Thermostaten planparallel und bündig mit der Wand so abschließen zu lassen, so dass die Drehachse des Bedienteiles des Thermostaten trotz des verkanteten Einbaus lotrecht zur Wandoberfläche ausgerichtet ist und die Position des Bedienteiles in der Aufnahmeöffnung der Abdeckung in Axial- und Radialrichtung unverändert ist.

Eine sehr aufwendige Montage mit zusätzlichen Einstellmitteln, Halter, Distanzhülse und Lagefixierungsmittel zeigt die EP 2 876 339 B1 für einen Wandeinbaukasten mit einem darin verbauten Thermostaten auf einem Ventil. Nachteilig ist hier zudem die Vorgabe einer umfangreichen Montageanleitung, an die zum Beispiel der Installateur sich genau halten muss, um einen nachträglichen Tiefenausgleich und einen Ausgleich eines verdreht eingebauten Wandeinbaukastens zu schaffen. Nachteilig der hierin vorgeschlagenen Lösung ist zudem, dass der Ausgleich nur planparallel zur Wand möglich ist. Es fehlt insbesondere die Möglichkeit für die Abdeckung eines verkantet eingebauten Wandeinbaukastens nachträglich einen Ausgleich so zu schaffen, so dass die Abdeckung wieder bündig an der Wandoberfläche anliegt und die Drehachse des Bedienteiles des Thermostaten sowie die Ventilachse idealerweise lotrecht zur Wandoberfläche ausgerichtet sind.

Eine zum Stand der Technik gehörende Lösung, bei der auch sowohl ein Tiefenausgleich als auch der Ausgleich eines parallel zur Wandoberfläche verdreht eingebauten Wandeinbaukastens durch eine Abdeckung möglich ist, zeigt die DE 103 12 366 B3. Allerdings ist hier auch ein Rahmen als zusätzliches Bauelement zwischen Wandeinbaukasten und Abdeckung erforderlich, der mit dem Wandeinbaukasten zu verschrauben ist, was einen zusätzlichen Montagevorgang bedeutet. Außerdem zeigt auch die hier vorgestellte Lösung nicht auf, wie bei einem zur Wandoberfläche verkantet eigebauten Wandeinbaukasten ein Ausgleich durch die Abdeckung geschaffen werden kann.

Einen weiteren Lösungsvorschlag zeigt die DE 10 2004 058 353 B3 mit einem in der in der Abdeckung integrierte Thermostaten, der das Einstellelement eines Ferneinstellventiles ist. Die Wirkung des Thermostaten auf das Ferneinstellventil erfolgt hierbei über ein Kapillarrohr als Kraftübertragungselement. Diese Ausführung hat zwar den Vorteil, dass die Ausrichtung des Bedienteiles des Thermostaten zur Öffnung in der Abdeckplatte bzw. Rahmens wegen des flexiblen Kapillarrohres unabhängig von dem Einbauzustand des Wandeinbaukastens ist, jedoch wird auch hier einerseits immer noch ein Rahmen als zusätzliches Bauelement zwischen Wandeinbaukasten und Abdeckung benötigt, andererseits ist auch hier nur ein Ausgleich eines zur Wand planparallel verdrehten Wandeinbaukastens durch die Abdeckung möglich. Bei verkantet eingebauten Wandeinbaukasten erfolgt kein Ausgleich. Zudem stört das fest zwischen dem Einstellelement und dem Ventil montierte Verbindungselement, hier das Kapillarrohr zum Beispiel bei einer Wartung, da die Abdeckung nicht vollständig entfernt werden und das Kapillarrohr zudem beschädigt werden kann.

Die Erfindung hat die Aufgabe für einen einseitig offenen Wandeinbaukasten einer Reglerbox mit einem darin verbauten Ventil für Heizungs- oder Kühlanlagen einen auf das Ventil zu montierenden Thermostaten, der eine Oberbaugruppe bestehend aus einer Abdeckung und einem Bedienteil und einer Unterbaugruppe bestehend aus einem Weggeber mit Justier- und Befestigungsmitteln aufweist, für die offene Seite des Wandeinbaukasten zu schaffen, wobei die Oberbaugruppe einen Ausgleich für fehlerhafte Einbaulagen des Wandeinbaukastens in der Wand, nämlich eines zu tief und/oder in der Wand verdreht und/oder verkantet eingebauten Wandeinbaukasten so ermöglicht, dass ohne zusätzliche Einstellmittel und ohne zusätzliche Montageschritte die Abdeckung mit Bedienelement direkt auf den Wandeinbaukasten aufgesteckt werden kann und alle fehlerhaften Einbaulagen, die sich durch separates oder kombiniertes Verdrehen um die Raumachsen des Wandeinbaukastens und ggf. zusätzlich durch eine falsche Einbautiefe ergeben, ausgeglichen werden können, so dass die Abdeckung bündig an der Wand anliegt, die Drehachse des Bedienteiles des Thermostaten lotrecht zur Wandoberfläche ausgerichtet ist und die Position des Bedienteiles in der Aufnahmeöffnung der Abdeckung in Axialrichtung unverändert ist.

Diese Aufgabe wird erfindungsgemäß dadurch gelöst, dass die beiden Baugruppen auch in Bezug auf die Raumachsen x und y zueinander verschiebbar sind, dass sowohl die Funktion des Thermostaten als auch die Verschiebbarkeit der Ober- zur Unterbaugruppe durch ein Übergangsstücks gebildet ist, das beide Baugruppen einstellbar mechanisch verbindet, dass das als Ring ausgebildete Übergangsstück zwei gegenüberliegende, am Außenumfang angeordnete Außennuten und hierauf bezogen mindestens zwei, um einen Winkel verdrehte, ebenfalls gegenüberliegende Innennuten am Innenumfang aufweist, wobei in die Innennuten erste Mitnehmer der dem Ventil zugeordneten Unterbaugruppe und in die Außennuten zweite Mitnehmer der Oberbaugruppe eingreifen, und dass nach dem Prinzip einer Kreuzscheibenkupplung die Mitnehmer in den Außennuten und den Innennuten bezüglich der Längsachse des Thermostaten sowohl radiales Spiel aufweisen als auch axial verschiebbar sind und gleichzeitig in Umfangsrichtung für eine Kraftübertragung beim Drehen des Bedienteiles geführt sind.

Erfindungsgemäß wird bevorzugt sowohl die Funktion des Thermostaten als auch die Verschiebbarkeit der Ober- zur Unterbaugruppe durch ein Übergangsstücks hergestellt, das beide Baugruppen mechanisch verbindet.

Erfindungsgemäß weist das als Ring ausgebildete Übergangsstück zwei gegenüberliegende, am Außenumfang angeordnete Außennuten und hierauf bezogen mindestens zwei, um einen Winkel verdrehte, ebenfalls gegenüberliegende Innennuten am Innenumfang auf, wobei in die Innennuten Mitnehmer der dem Ventil zugeordneten Unterbaugruppe und in die Außennuten Mitnehmer der Oberbaugruppe eingreifen.

Eine vorteilhafte Ausbildung ist gegeben, wenn nach dem Prinzip einer Kreuzscheibenkupplung die Mitnehmer in den Innennuten und den Außennuten bezüglich der Thermostatlängsachse sowohl radiales Spiel aufweisen als auch axial verschiebbar sind und gleichzeitig in Umfangsrichtung für eine Kraftübertragung beim Drehen des Bedienteiles geführt sind.

Dabei ist vorgesehen, dass die Außennuten und die Innennuten unterschiedlich breit sind.

Von Vorteil ist es, wenn am Übergangsstück die mit den Innennuten korrespondierenden ersten Mitnehmer der Unterbaugruppe und/oder die mit den Außennuten korrespondierenden zweiten Mitnehmer der Oberbaugruppe unterschiedliche Breiten aufweisen, um eine eindeutige Lage der zu koppelnden Baugruppe sicherzustellen.

Bevorzugt ist hierbei vorgesehen, dass sowohl die Außen- als auch die Innennuten und die zugeordneten ersten und zweiten Mitnehmer jeweils um 180° zueinander versetzt angeordnet sind.

Eine bevorzugte Ausführungsform ist gegeben, wenn in der Unterbaugruppe, die in die Innennuten des Übergangsstückes eingreift, der temperaturabhängige Weggeber des Thermostaten und der Justierring, der zur Ausrichtung einer Sollwertskala des Bedienteiles auf einen vorgegebenen Ausdehnungszustand des Weggebers vorgesehen ist, integriert sind und die Oberbaugruppe, die in die Außennuten des Übergangsstückes eingreift, vom Bedienteil des Thermostaten und der Abdeckung gebildet ist.

Vorzugsweise sind die in den Innennuten des Übergangsstückes geführten ersten Mitnehmer Bestandteil des Justierringes.

Vorteilhaft ist auch die Ausbildung des Justierringes mit Halteelementen für das Übergangstück, damit für die Justierung einerseits die Position des Übergangsstück zum Justierring nach deren Montage in Drehrichtung fixiert ist, andererseits das Übergangsstück vom Justierring nicht mehr entfernt werden kann.

Ein weiterer Vorteil ist dadurch gegeben, dass bei zusammengeführter Ober- und Unterbaugruppe, die Ausrichtung der Abdeckung der Oberbaugruppe zu einer Wandoberfläche durch seitliche Führungslaschen an der Abdeckung, die in Aufnahmeöffnungen am Wandeinbaukasten eingreifen, ermöglicht ist, und zwar sowohl eine Drehung der Teile relativ um die Drehachse des Thermostaten als auch eine Tiefeneinstellung der Abdeckung relativ zum Wandeinbaukasten, wobei die Position des Bedienteiles in der Aufnahmeöffnung der Abdeckung in Axialrichtung nicht verändert ist.

Ein Ausführungsbeispiel der Erfindung ist in der Zeichnung dargestellt und im Folgenden näher beschrieben.

Es zeigt:
- Fig. 1: eine Reglerbox in Zusammenbau in isometrischer Schrägansicht von vorn gesehen;
- Fig. 2: desgleichen in einer Explosionsdarstellung;
- Fig. 3: die Reglerbox in einer Einbausolllage im Querschnitt gesehen;
- Fig. 4: die Reglerbox in Einbausollage von schräg vorn gesehen;
- Fig. 5: ein Übergangsstück in Draufsicht und in isometrischer Schrägansicht gesehen;
- Fig. 6: eine Unterbaugruppe des Thermostaten mit Justierring und Übergangsstück in explosionsartiger Darstellung;
- Fig. 7: desgleichen in Montagesollage gesehen;
- Fig. 8: ein Bedienteil in Unteransicht und im Mittellängsschnitt gesehen;
- Fig. 9: eine Oberbaugruppe mit Abdeckung und Übergangsstück im Mittellängsschnitt gesehen;
- Fig. 10: die Oberbaugruppe, Unterbaugruppe und Abdeckung in Zusammenbaulage teilweise im Längsschnitt gesehen;
- Fig. 11: eine Abdeckung samt Bedienteil im Schnitt gesehen;
- Fig. 12: den Justierring in Schrägansicht und im Mittellängsschnitt gesehen.

In den Zeichnungsfiguren 1 bis 12 ist eine Reglerbox 1 mit einem einseitig offenen Wandeinbaukasten 2 und einem darin verbauten Ventil 4 für Heizungs- oder Kühlanlagen gezeigt, wobei ein auf das Ventil 4 zu montierender Thermostat 5 gezeigt ist. Des Weiteren ist eine Oberbaugruppe 5a, bestehend aus einer Abdeckung 3 und einem zylindrischen um seine Mittellängsachse drehbaren Bedienteil 55a gezeigt, sowie eine Unterbaugruppe 5b, die aus einem Weggeber 13 des Thermostaten 5 mit Justiermitteln 14 und Befestigungsmitteln 16 besteht. Die Elemente sind weitestgehend in die offene Seite des Wandeinbaukastens 2 eingesetzt. In Montagesollage ist der Wandeinbaukasten 2 durch die Abdeckung 3 verschlossen, sodass lediglich das Bedienteil 55a nach außen vorragt und für manuellen Zugriff zugänglich ist. Die Oberbaugruppe 5a ist durch entsprechende Elemente so ausgebildet, dass ein Ausgleich für fehlerhafte Einbaulagen des Wandeinbaukastens 2 beispielsweise in der Wand 7 möglich ist, nämlich dann, wenn der Wandeinbaukasten 2 zu tief und/oder in der Wand verdreht und/oder verkantet eingebaut ist, um zu ermöglichen, dass ohne zusätzliche Manipulationen und ohne zusätzliche Montageschritte die Abdeckung 3 mit Bedienteil 55a direkt auf die Mündung des Wandeinbaukastens 2 aufgesteckt beziehungsweise teilweise in diesen eingesteckt werden kann und alle fehlerhaften Einbaulagen, die sich durch separates oder kombiniertes Verdrehen um die Raumachsen des Wandeinbaukastens 2 und gegebenenfalls zusätzlich durch eine falsche Einbautiefe gegeben, ausgeglichen werden können, sodass im Ergebnis die Abdeckung 3 bündig an der Außenfläche der entsprechenden Wand 7 anliegt und die Drehachse des Bedienteiles 55a des Thermostaten 5 lotrecht zur Wandoberfläche 7 ausgerichtet ist, wobei die Position des Bedienteiles 55a zur Aufnahmeöffnung in der Abdeckung 3 in axialer Richtung unverändert ist.

Um entsprechende Möglichkeiten zu schaffen, bildet eine auf den Wandeinbaukasten 2 aufsteckbare Abdeckung 3 mit Bedienteil 55a die Oberbaugruppe 5a des Thermostaten 5, während der Weggeber 13 mit Justiermitteln 14 und Befestigungsmitteln 16 die Unterbaugruppe 5b bildet. Beide Baugruppen sind bezogen auf die drei Raumachsen 6 (x, y und z) des Wandeinbaukastens 2 zueinander verstellbar, wobei durch das Zusammenführen der Oberbaugruppe 5a mit der Unterbaugruppe 5b sowohl ein funktionsfähiger Thermostat 5 gebildet ist, als auch der Abstand zwischen der Abdeckung 3 und dem Wandeinbaukasten 2 für einen Ausgleich der Einbautiefe einstellbar ist.

Die Drehachse des Bedienteils 55a und damit auch des Thermostaten 5 ist mit der Bezugsziffer 15 angegeben.

Für die Möglichkeit der Funktion des Thermostaten 5 und auch für die Möglichkeit der Verschiebbarkeit der Oberbaugruppe 5a relativ zur Unterbaugruppe 5b ist ein Übergangsstück 8 zwischen den Baugruppen angeordnet, welches beide Baugruppen mechanisch und einstellbar verbindet.

Das Übergangsstück 8 ist als Ring ausgebildet und weist zwei gegenüberliegende, am Außenumfang angeordnete Außennuten 9.1, 9,2 auf, die im Ausführungsbeispiel unterschiedlich breit sind. Hiermit zusammenwirkend und in Eingriff befindlich sind zwei um einen Drehwinkel verdrehte, ebenfalls gegenüberliegende, und ebenso vorzugsweise unterschiedlich breite Innennuten 10.1, 10.2 am Innenumfang, also nach radial innen offene Nuten, vorgesehen, wobei in die Innennuten 10.1, 10.2 erste Mitnehmer 11.1, 11.2 der dem Ventil 4 zugeordneten Unterbaugruppe 5b und in die Außennuten 9.1, 9.2 zweite Mitnehmer 12.1, 12.2 der Oberbaugruppe 5a eingreifen. Um eine verwechslungsfreie Zuordnung der zu koppelnden Baugruppen zu ermöglichen, sind am Übergangsstück 8 die mit den Innennuten 10.1, 10.2 korrespondierenden ersten Mitnehmer 11.1, 11.2 der Unterbaugruppe 5b und die mit den Außennuten 9.1, 9.2 korrespondierenden zweiten Mitnehmer 12.1, 12.2 der Oberbaugruppe 5a unterschiedlich breit ausgebildet, sodass sie nur in der korrekten Lage ineinander steckbar sind.

Sowohl die Außennuten 9.1, 9.2, als auch die Innennuten 10.1, 10.2 und die diesen zugeordneten ersten und zweiten Mitnehmer 11.1, 11.2 beziehungsweise 12.1 und 12.2, sind jeweils um 180° versetzt angeordnet.

Eine Besonderheit hierbei ist, dass nach dem Prinzip einer Kreuzscheibenkupplung die ersten und zweiten Mitnehmer 11.1, 11.2; 12.1, 12.2 in Außennuten 9.1, 9.2 und den Innennuten 10.1, 10.2 bezüglich der Längsachse des Thermostaten 5 beziehungsweise bezüglich der Drehachse 15 des Thermostaten 5 sowohl radiales Spiel aufweisen als auch axial verschieblich sind, wobei dennoch in Umfangsrichtung gleichzeitig eine Führung für die Kraftübertragung beim Drehen des Bedienteiles 55a erfolgt. Auf diese Weise sind entsprechende Einbautoleranzen zwischen Abdeckung 3 und Wandeinbaukasten 2 auszugleichen und eine ordnungsgemäße Einstellung der Abdeckung 3 relativ zur Wandfläche 7 ermöglicht. In der Unterbaugruppe 5b, die in die Innennuten 10.1, 10.2 des Übergangsstückes 8 eingreift, ist der temperaturabhängige Weggeber 13 des Thermostaten 5 und der Justierring 14, der zur Ausrichtung einer Sollwertskala des Bedienteiles 55a auf einen vorgegebenen Ausdehnungszustand des Weggebers 13 vorgesehen ist, integriert. Die Oberbaugruppe 5a, die in die Außennuten 9.1, 9.2 des Übergangsstückes 8 eingreift, ist vom Bedienteil 55a des Thermostaten 5 und der Abdeckung 3 gebildet.

Insbesondere sind die in den Innennuten 10.1, 10.2 des Übergangsstückes 8 geführten ersten Mitnehmer 11.1, 11.2 Bestandteil des Justierringes 14.

Der Justierring 14 weist Halteelemente 17 für das Übergangsstück 8 auf, damit für die Justierung einerseits die Position des Übergangsstückes 8 zum Justierring 14 nach deren Montage in Drehrichtung fix ist, andererseits das Übergangsstück 8 vom Justierring 14 aber auch nicht mehr entfernt werden kann.

Bei ordnungsgemäß zusammengeführter Oberbaugruppe 5a und Unterbaugruppe 5b wird die Ausrichtung der Abdeckung 3 der Oberbaugruppe 5a zu einer Wandoberfläche 7 durch seitliche Führungslaschen 18 an der Abdeckung 3 gebildet, die in Taschen beziehungsweise entsprechende Aufnahmeöffnungen 23, am Wandeinbaukasten 2 eingreifen. Hierdurch wird sowohl die Drehung um die Raumachsen 6 unterstützt, als auch die Verschiebung zu den Raumachsen 6, wobei dabei die Position des Bedienteiles 55a in der Aufnahmeöffnung 19 der Abdeckung 3 in Axialrichtung, also in Richtung parallel zur Drehachse 15 nicht verändert wird.

In der Figur 1 ist die Reglerbox 1 in Zusammenbaulage gezeigt, wobei der Wandeinbaukasten 2 den Thermostaten 5 aufnimmt und die Abdeckung 3 lagerichtig zur entsprechenden Wandfläche 7 des Mauerwerks ausgerichtet ist.

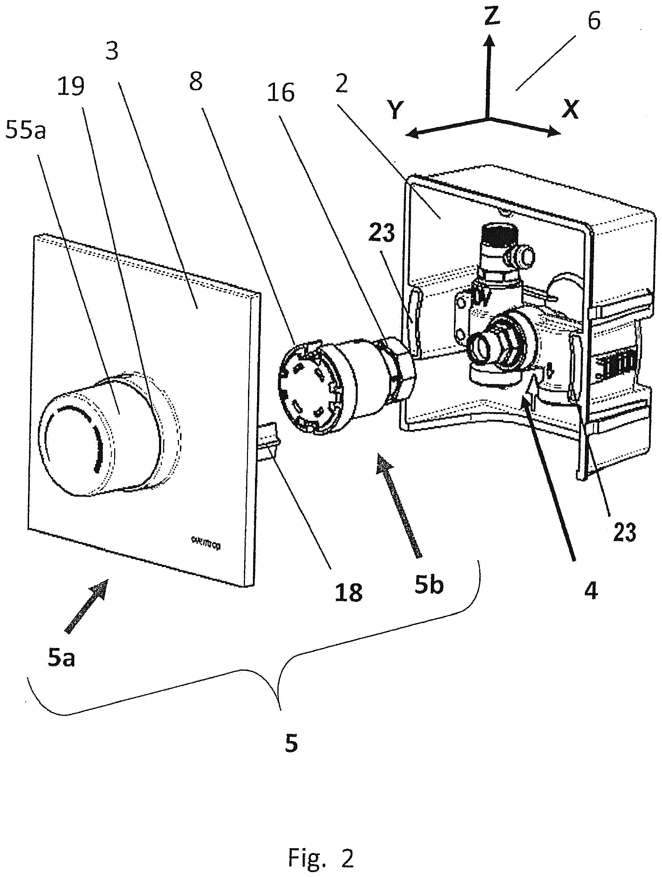

In Figur 2 ist in einer Explosionszeichnung die Anordnung der entsprechenden Komponenten gezeigt, wobei im Wandeinbaukasten 2 die Ventilgruppe 4 angeordnet ist, auf die der Thermostat 5 mit dem Befestigungsmittel 16 aufgeschraubt wird.

Der Thermostat 5 besteht aus der Unterbaugruppe 5b und der Abdeckung 3 samt Bedienteil 55a, die zusammen die Oberbaugruppe 5a bilden, sowie einem zwischen den beiden Baugruppen angeordneten Übergangsstück 8.

Die Aufnahmeöffnung 19 für das Bedienteil 55a ist mit einem Kragen für das Bedienteil 55a versehen.

Durch die erfindungsgemäße Ausbildung ist eine Beweglichkeit der Oberbaugruppe 5a zur Unterbaugruppe 5b in alle Raumachsen 6 zur Ausrichtung zum Wandeinbaukasten 2 realisiert.

Die von der Abdeckung 3 rückseitig abragenden Führungslaschen 18 greifen in Solllage in die entsprechenden Aufnahmeöffnungen 23 beziehungsweise Taschen des Wandeinbaukastens 2 ein und ermöglichen eine Drehung der Teile relativ um die Drehachse 15 des Thermostaten und eine Tiefeneinstellung der Abdeckung 3 relativ zum Wandeinbaukasten 2.

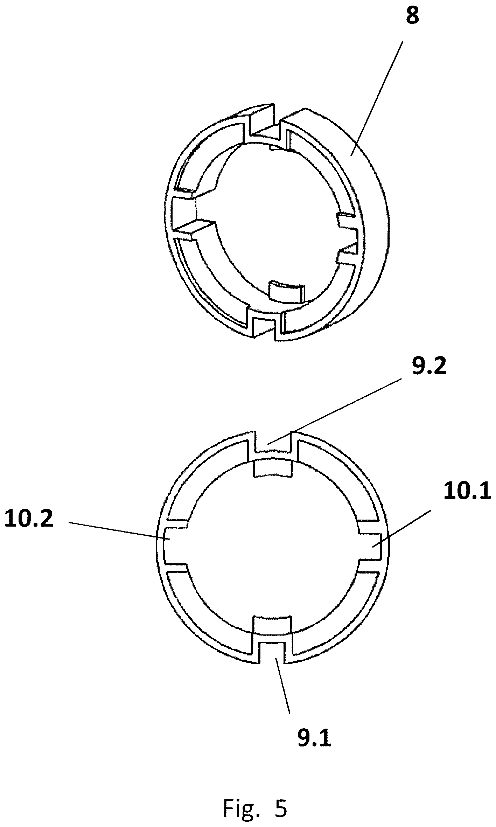

In Figur 3 ist die Einbausolllage im Schnitt gezeigt. Hierbei greifen die entsprechenden Komponenten ineinander, um die korrekte Ausrichtung der Abdeckung 3 zur Wand 7 des Mauerwerks, unabhängig von der korrekten Lage des Wandeinbaukastens 2 zu ermöglichen. Das Übergangsstück 8 ist in der Figur 5 als separates Element gezeigt, wobei dort insbesondere auch die Außennuten 9.1, 9.2 mit nach außen weisender Öffnung gezeigt sind und ebenso die Innennuten 10.1 und 10.2 am Innenmantel mit nach innen weisender Nutöffnung. Die Außennuten 9.1, 9.2 beziehungsweise die Innennuten 10.1, 10.2 sind unterschiedlich breit ausgebildet, um eine verwechslungsfreie Zuordnung zu ermöglichen.

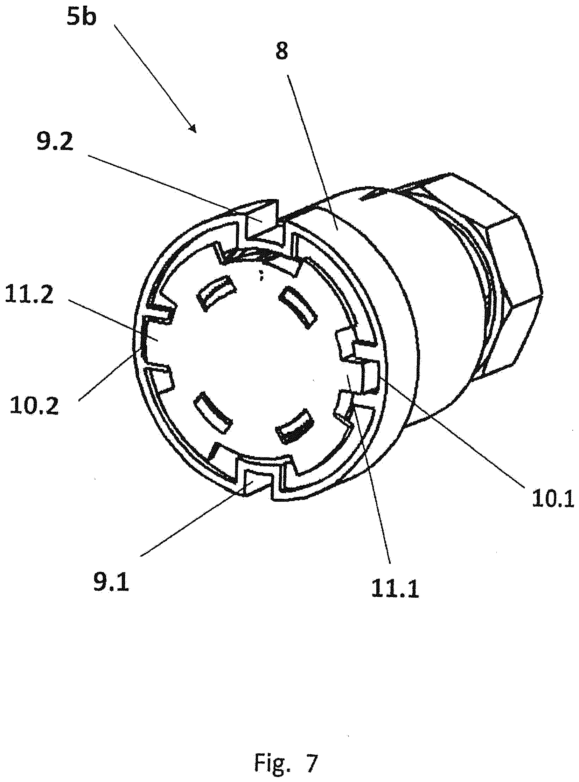

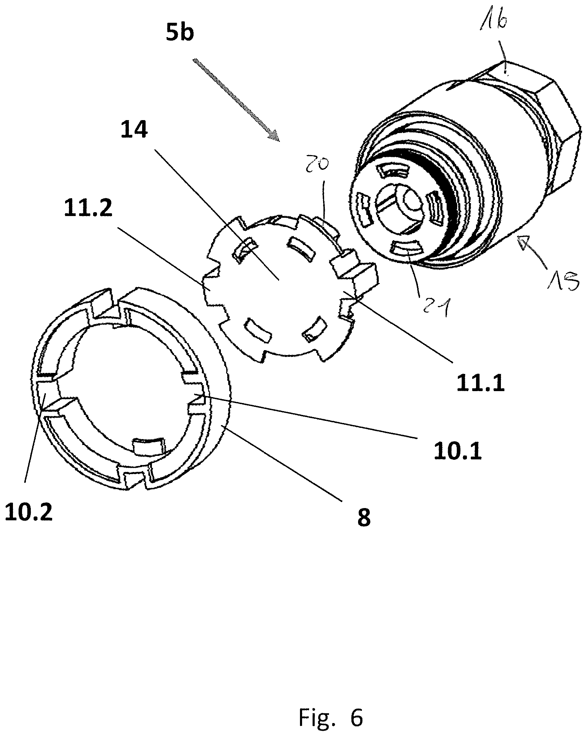

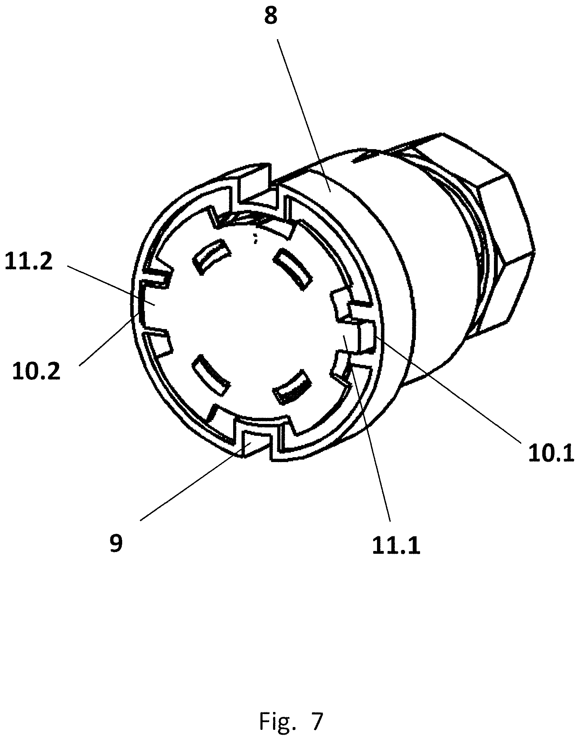

In Figur 6 ist eine Explosionsdarstellung gezeigt, die den Weggeber 13 des Thermostaten 5 samt Befestigungsmittel 16 zeigt. Am vorderen Ende dieser Baueinheit ist ein Justierring 14 montiert, der mit entsprechenden Vorsprüngen 20 in dazu passende Ausnehmungen 21 am Bauteil, welches den Weggeber 13 aufnimmt, eingreift und somit die Einstellung ermöglicht. Radial außen weist der Justierring 14 die ersten Mitnehmer 11.1, 11.2 auf, die in Einbausollage in die entsprechenden Innennuten 10.1, 10.2 des Übergangsstückes 8 eingreifen und dessen relative Lageeinstellung ermöglichen. Der Zusammenbau dieser Teile ist in der Figur 7 gezeigt.

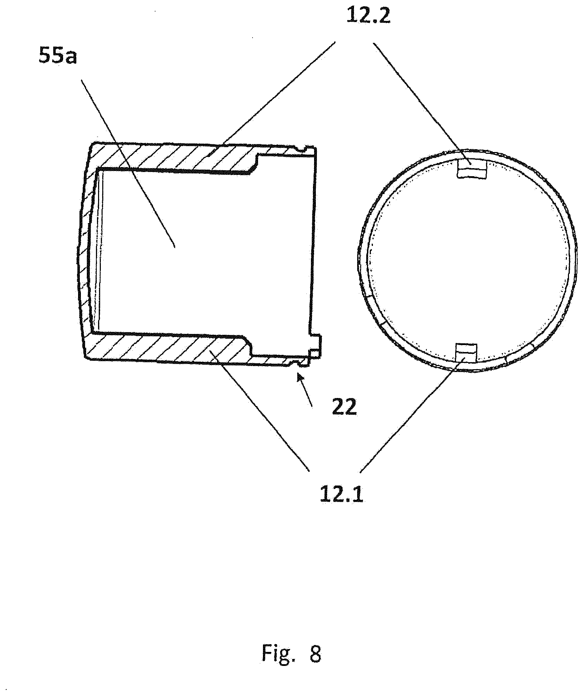

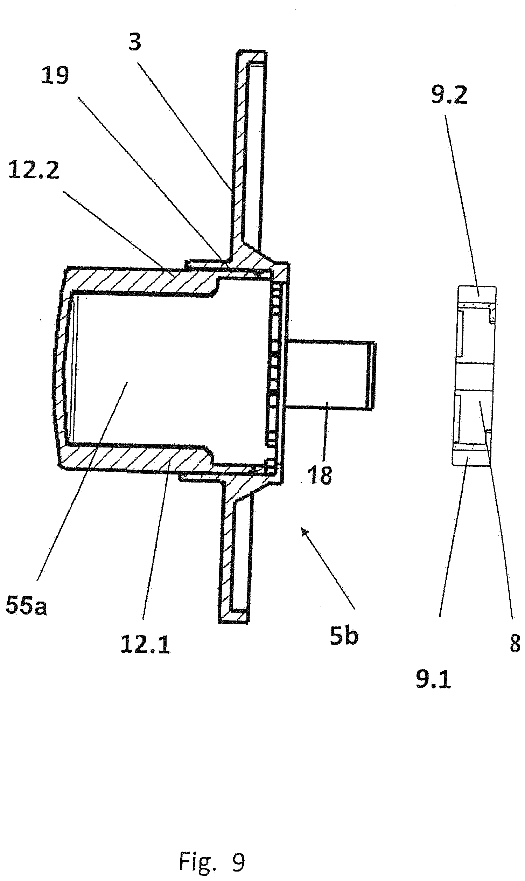

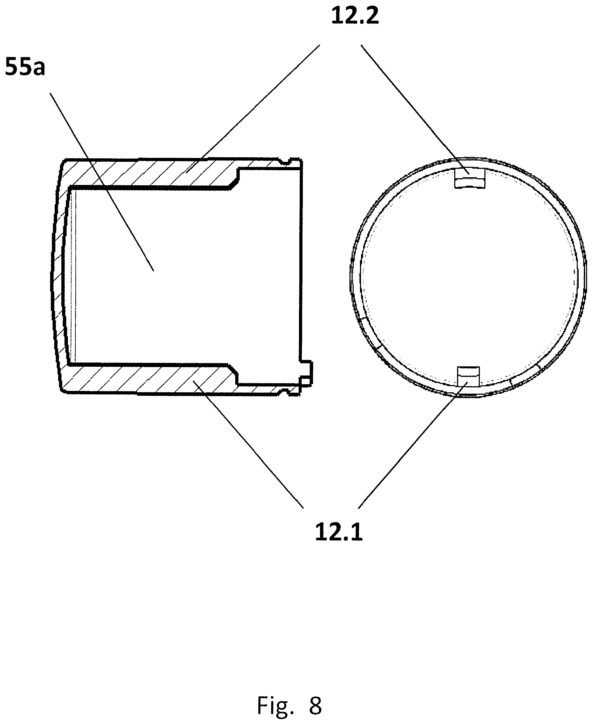

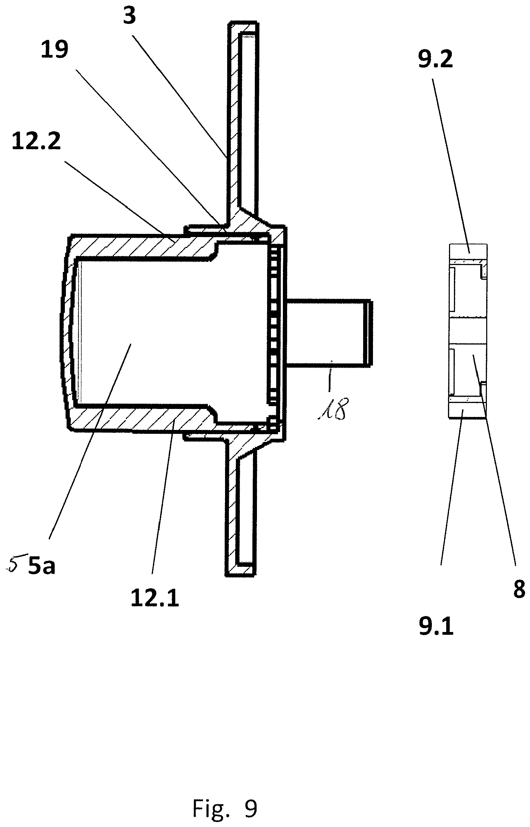

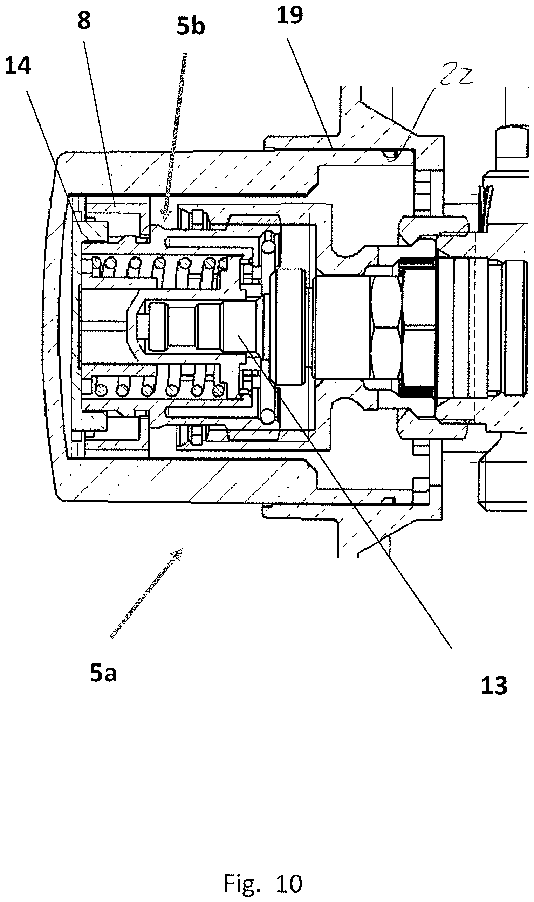

In Figur 8 ist das Bedienteil 55a gezeigt, welches ein hohlzylindrischer Baukörper mit stirnseitiger Abdeckung und unterseitiger Öffnung bildet. Am Bedienteil 55a sind innenseitig die zweiten Mitnehmer 12.1, 12.2 ausgebildet, die in Montagesollage in die entsprechenden außen liegenden Außennuten 9.1, 9.2 des Übergangsstückes 8 eingreifen. Die Zusammenbaulage des Bedienteiles 55a mit der Abdeckung 3 ist in Figur 9 gezeigt, wobei dort auch das Übergangsstück 8 mit den Außennuten 9.1, 9.2 gezeigt ist, in welche die zweiten Mitnehmer 12.1, 12.2 des Bedienteiles 55a in Montagesollage eingreifen. Die Zusammenbaulage ist in Figur 10 gezeigt, wobei auch gezeigt ist, dass in eine am Rand des Bedienteils 55a vorgesehene umlaufende Nut 22 ein Vorsprung im Bereich der umgebenden Abdeckung 3 eingreift, sodass die Teile miteinander verbunden sind.

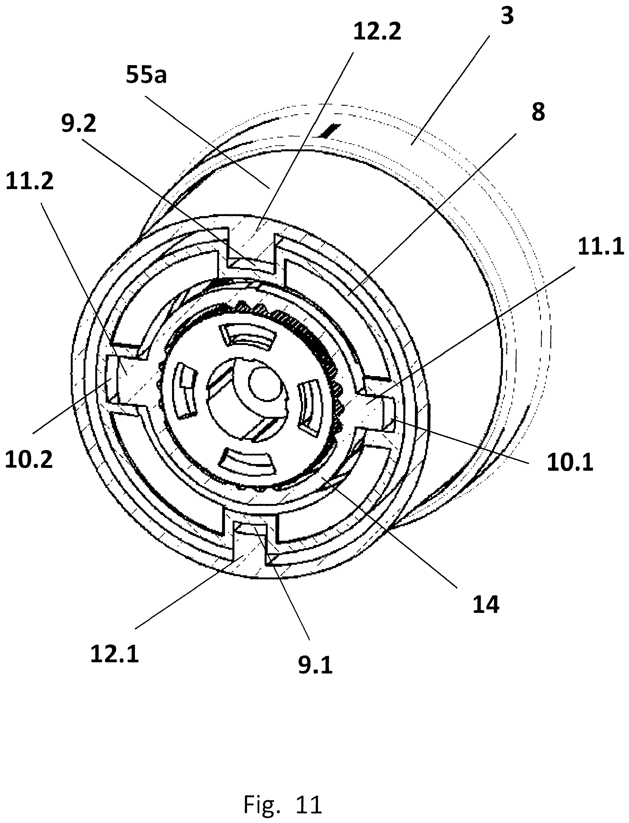

Die Zusammenbaulage von Abdeckung 3, Bedienteil 55a, Übergangsstück 8 und Justierring 14 ist in Figur 11 gezeigt.

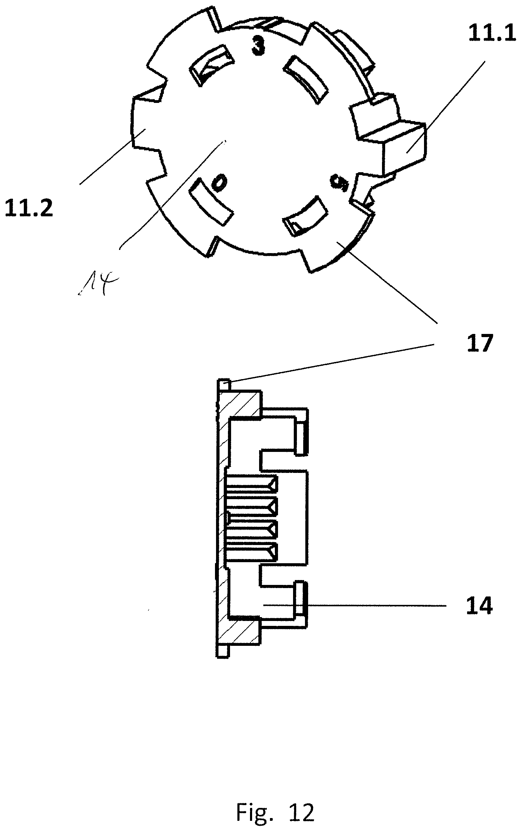

In Figur 12 ist der Justierring 14 als Einzelteil dargestellt.

Die Erfindung ist nicht auf das Ausführungsbeispiel beschränkt, sondern im Rahmen der Offenbarung vielfach variabel.

### Bezugszeichenliste:

- 01: Reglerbox
- 02: Wandeinbaukasten
- 03: Abdeckung
- 04: Ventil
- 05: Thermostat
- 5a: Oberbaugruppe Thermostat
- 5b: Unterbaugruppe Thermostat
- 06: Raumachsen des Wandeinbaukastens
- 07: Wand des Mauerwerks
- 08: Übergangsstück
- 09: Nut außen am Übergangsstück
- 10: Nut innen am Übergangsstück
- 11: Mitnehmer am Justierring
- 12: Mitnehmer am Bedienelement
- 13: Weggeber
- 14: Justierring
- 15: Drehachse Thermostat
- 16: Befestigungsmittel
- 17: Haltelemente
- 18: Führungslaschen
- 19: Aufnahmeöffnung in 3
- 55a: Bedienteil
- 20: Vorsprünge an 14
- 21: Ausnehmungen
- 22: Nut
- 23: Aufnahmeöffnung in 2

## Patentansprüche

1. Reglerbox (1) mit einem einseitig offenen Wandeinbaukasten (2) und einem darin verbauten Ventil (4) für Heizungs- oder Kühlanlagen, einem auf das Ventil (4) montierten Thermostaten (5), der eine Oberbaugruppe (5a), bestehend aus einer Abdeckung (3) und einem Bedienteil (55a), und eine Unterbaugruppe (5b), bestehend aus einem Weggeber (13) mit Justier- (14) und Befestigungsmitteln (16), aufweist, wobei eine auf den Wandeinbaukasten (2) aufsteckbare Abdeckung (3) mit Bedienteil (55a) die Oberbaugruppe (5a) des Thermostaten (5) bildet und der Weggeber (13) mit Justier- (14) und Befestigungsmitteln (16) die Unterbaugruppe (5b) bildet, wobei beide Baugruppen bezogen auf die Raumachse (6) z des Wandeinbaukastens (2) zueinander verschiebbar sind und durch das Zusammenführen der Oberbaugruppe (5a) auf die Unterbaugruppe (5b) sowohl ein funktionsfähiger Thermostat (5) gebildet ist, als auch der Abstand zwischen Abdeckung (3) und Wandeinbaukasten (2) für einen Ausgleich der Einbautiefe einstellbar ist, **dadurch gekennzeichnet, dass** die beiden Baugruppen auch in Bezug auf die Raumachsen x und y zueinander verschiebbar sind, **dass** sowohl die Funktion des Thermostaten (5) als auch die Verschiebbarkeit der Ober- zur Unterbaugruppe (5a, 5b) durch ein Übergangsstücks (8) gebildet ist, das beide Baugruppen einstellbar mechanisch verbindet, **dass** das als Ring ausgebildete Übergangsstück (8) zwei gegenüberliegende, am Außenumfang angeordnete Außennuten (9.1, 9.2) und hierauf bezogen mindestens zwei, um einen Winkel verdrehte, ebenfalls gegenüberliegende Innennuten (10.1, 10.2) am Innenumfang aufweist, wobei in die Innennuten (10.1, 10.2) erste Mitnehmer (11.1, 11.2) der dem Ventil (4) zugeordneten Unterbaugruppe (5b) und in die Außennuten (9.1, 9.2) zweite Mitnehmer (12.1, 12.2) der Oberbaugruppe (5a) eingreifen, und **dass** nach dem Prinzip einer Kreuzscheibenkupplung die Mitnehmer (11.1, 11.2; 12.1, 12.2) in den Außennuten (9.1, 9.2) und den Innennuten (10.1, 10.2) bezüglich der Längsachse des Thermostaten (5) sowohl radiales Spiel aufweisen als auch axial verschiebbar sind und gleichzeitig in Umfangsrichtung für eine Kraftübertragung beim Drehen des Bedienteiles (55a) geführt sind.

2. Reglerbox (1) nach Anspruch 1, **dadurch gekennzeichnet, dass** die Außennuten (9.1, 9.2) und die Innennuten (10.1, 10.2) unterschiedlich breit sind.

3. Reglerbox (1) nach einem der Ansprüche 1 oder 2, **dadurch gekennzeichnet, dass** am Übergangsstück (8) die mit den Innennuten (10.1, 10.2) korrespondierenden ersten Mitnehmer (11.1, 11.2) der Unterbaugruppe (5b) und/oder die mit den Außennuten (9.1. 9.2) korrespondierenden zweiten Mitnehmer (12.1, 12.2) der Oberbaugruppe (5a) unterschiedliche Breiten aufweisen.

4. Reglerbox (1) nach einem der Ansprüche 1 bis 3, **dadurch gekennzeichnet, dass** sowohl die Außen- (9.1, 9.2) als auch die Innennuten (10.1, 10.2) und die zugeordneten ersten und zweiten Mitnehmer (11.1, 11.2; 12.1, 12.2) jeweils um 180° zueinander versetzt angeordnet sind.

5. Reglerbox (1) nach einem der Ansprüche 1 bis 4, **dadurch gekennzeichnet, dass** in der Unterbaugruppe (5b), die in die Innennuten (10.1, 10.2) des Übergangsstückes (8) eingreift, der temperaturabhängige Weggeber (13) des Thermostaten (5) und der Justierring (14), der zur Ausrichtung einer Sollwertskala des Bedienteiles (55a) auf einen vorgegebenen Ausdehnungszustand des Weggebers (13) vorgesehen ist, integriert ist und die Oberbaugruppe (5a), die in die Außennuten (9.1, 9.2) des Übergangsstückes (8) eingreift, vom Bedienteil (55a) des Thermostaten (5) und der Abdeckung (3) gebildet ist.

6. Reglerbox (1) nach einem der Ansprüche 1 bis 5, **dadurch gekennzeichnet, dass** die in den Innennuten (10.1, 10.2) des Übergangsstückes (8) geführten ersten Mitnehmer (11.1, 11.2) Bestandteil des Justierringes (14) sind.

7. Reglerbox (1) nach einem der Ansprüche 1 bis 6, **dadurch gekennzeichnet, dass** der Justierring (14) Halteelemente (17) für das Übergangstück (8) aufweist, damit für die Justierung einerseits die Position des Übergangsstück (8) zum Justierring (14) nach deren Montage in Drehrichtung fixiert ist, andererseits das Übergangsstück (8) vom Justierring (14) nicht lösbar ist.

8. Reglerbox (1) nach einem der Ansprüche 1 bis 7, **dadurch gekennzeichnet, dass** bei zusammengeführter Ober- und Unterbaugruppe (5a, 5b), die Ausrichtung der Abdeckung (3) der Oberbaugruppe (5a) zu einer Wandoberfläche (7) durch seitliche Führungslaschen (18) an der Abdeckung (3), die in Aufnahmeöffnungen (23) am Wandeinbaukasten (2) eingreifen, ermöglicht ist, und zwar sowohl eine Drehung der Teile relativ um die Drehachse (15) des Thermostaten (5) als auch eine Tiefeneinstellung der Abdeckung (3) relativ zum Wandeinbaukasten (2) wobei die Position des Bedienteiles (55a) in der Aufnahmeöffnung (19) der Abdeckung (3) in Axialrichtung nicht verändert ist.

## Claims

1. A control box (1) comprising a one-side open wall installation box (2) and a valve (4) built therein for heating or cooling installations, a thermostat (5) mounted on the valve (4), said thermostat including an upper subassembly (5a) consisting of a cover (3) and an operation part (55a), and a lower subassembly (5b) consisting of a displacement transducer (13) with adjustment (14) and fixation means (16), a cover (3) to be plugged onto the wall installation box (2) with an operation part (55a) forming the upper subassembly (5a) of the thermostat (5), and the displacement transducer (13) with the adjustment (14) and fixation means (16) forming the lower subassembly (5b), both subassemblies being displaceable relative to each other with reference to the spatial axis (6) z of the wall installation box (2), and by the combination of the upper subassembly (5a) and the lower subassembly (5b) a functioning thermostat (5) being formed, and also the distance between cover (3) and wall installation box (2) being adjustable for an adjustment of the installation depth, **characterized by that** the two subassemblies are also displaceable relative to each other with reference to the spatial axes x and y, **that** the function of the thermostat (5) as well as the displaceability of the upper subassembly (5a) relative to the lower subassembly (5b) is formed by a transition piece (8) that mechanically connects both subassemblies in an adjustable manner, **that** the transition piece (8) designed as a ring has two opposite outer grooves (9.1, 9.2) on the outer circumference and referred thereto, at least two opposite inner grooves (10.1, 10.2) rotated by an angle on the inner circumference, first entraining means (11.1, 11.2) of the lower subassembly (5b) assigned to the valve (4) engaging with the inner grooves (10.1, 10.2) and second entraining means (12.1, 12.2) of the upper subassembly (5a) engaging with the outer grooves (9.1, 9.2), and **that** according to the principle of an Oldham coupling, the entraining means (11.1, 11.2; 12.1, 12.2) in the outer grooves (9.1, 9.2) and the inner grooves (10.1, 10.2) have, with reference to the longitudinal axis of the thermostat (5), radial play and are also axially displaceable and simultaneously are guided circumferentially for a power transmission upon rotation of the operation part (55a).

2. The control box (1) of claim 1, **characterized by that** the outer grooves (9.1, 9.2) and the inner grooves (10.1, 10.2) have different widths.

3. The control box (1) of one of claims 1 or 2, **characterized by that** at the transition piece (8), the first entraining means (11.1, 11.2) of the lower subassembly (5b) corresponding with the inner grooves (10.1, 10.2) and/or the second entraining means (12.1, 12.2) of the upper subassembly (5a) corresponding with the outer grooves (9.1, 9.2) have different widths.

4. The control box (1) of one of claims 1 to 3, **characterized by that** the outer grooves (9.1, 9.2) as well as the inner grooves (10.1, 10.2) and the assigned first and second entraining means (11.1, 11.2; 12.1, 12.2) are respectively offset relative to each other by 180°.

5. The control box (1) of one of claims 1 to 4, **characterized by that** in the lower subassembly (5b) engaging with the inner grooves (10.1, 10.2) of the transition piece (8), the temperature-dependent displacement transducer (13) of the thermostat (5) and the adjustment ring (14) provided for the orientation of a scale of desired values of the operation part (55a) on a given extension state of the displacement transducer (13) is integrated, and the upper subassembly (5a) engaging with the outer grooves (9.1, 9.2) of the transition piece (8) is formed by the operation part (55a) of the thermostat (5) and the cover (3).

6. The control box (1) of one of claims 1 to 5, **characterized by that** the first entraining means (11.1, 11.2) guided in the inner grooves (10.1, 10.2) of the transition piece (8) are part of the adjustment ring (14).

7. The control box (1) of one of claims 1 to 6, **characterized by that** the adjustment ring (14) includes holding elements (17) for the transition piece (8), in order that for the adjustment, on the one hand, the position of the transition piece (8) relative to the adjustment ring (14) after the assembly thereof is fixed in the direction of rotation and, on the other hand, the transition piece (8) cannot be removed from the adjustment ring (14).

8. The control box (1) of one of claims 1 to 7, **characterized by that** with mounted upper and lower subassemblies (5a, 5b), the orientation of the cover (3) of the upper subassembly (5a) to a wall surface (7) is enabled by lateral guide links (18) at the cover (3) that engage with reception openings (23) at the wall installation box (2), namely a relative rotation of the parts about the axis of rotation (15) of the thermostat (5) as well as also a depth adjustment of the cover (3) relative to the wall installation box (2), with the position of the operation part (55a) in the reception opening (19) of the cover (3) not being modified in the axial direction.

## Revendications

1. Boîtier de régulateur (1) comprenant un boîtier (2) ouvert d'un côté pour l'encastrement dans une paroi et une soupape (4) installée dans celui-ci pour des installations de chauffage ou de refroidissement, un thermostat (5) monté à la soupape (4), le thermostat comportant un sous-ensemble supérieur (5a) consistant en une cache (3) et une partie de manœuvre (55a), et un sous-ensemble inférieur (5b) consistant en un capteur de position (13) avec des moyens d'ajustage (14) et de fixation (16), une cache (3) enfichable sur le boîtier (2) pour l'encastrement dans une paroi avec la partie de manœuvre (55a) réalisant le sous-ensemble supérieur (5a) du thermostat (5), et le capteur de position (13) avec les moyens d'ajustage (14) et de fixation (16) réalisant le sous-ensemble inférieur (5b), les deux sous-ensembles étant déplaçables l'un à l'autre par rapport à l'axe spatial (6) z du boîtier (2) pour l'encastrement dans une paroi, et par la combinaison du sous-ensemble supérieur (5a) et du sous-ensemble inférieur (5b) un thermostat (5) fonctionnel étant réalisé, et aussi la distance entre la cache (3) et le boîtier (2) pour l'encastrement dans une paroi étant ajustable pour un ajustage de la profondeur d'installation, **caractérisé en ce que** les deux sous-ensembles sont aussi déplaçables l'un à l'autre par rapport aux axes spatiaux x et y, **que** la fonction du thermostat (5) aussi bien que le coulissement du sous-ensemble supérieur (5a) par rapport au sous-ensemble inférieur (5b) sont réalisés par une pièce de jonction (8) qui mécaniquement lie les deux sous-ensembles de façon ajustable, **que** la pièce de jonction (8) réalisée comme un anneau comporte deux rainures externes (9.1, 9.2) opposées sur la périphérie externe et par rapport à cela, au moins deux rainures internes (10.1, 10.2) opposées tournées d'un angle sur la périphérie interne, des premiers moyens d'entraînement (11.1, 11.2) du sous-ensemble inférieur (5b) associé à la soupape (4) s'engageant dans les rainures internes (10.1, 10.2) et des deuxièmes moyens d'entraînement (12.1, 12.2) du sous-ensemble supérieur (5a) s'engageant dans les rainures externes (9.1, 9.2), et **que** selon le principe d'un joint d'Oldham, les moyens d'entraînement (11.1, 11.2; 12.1, 12.2) dans les rainures externes (9.1, 9.2) et les rainures internes (10.1, 10.2) ont, par rapport à l'axe longitudinal du thermostat (5), un jeu radial et sont aussi axialement déplaçables et simultanément sont guidés dans la direction circonférentielle pour une transmission de force lors de la rotation de la partie de manœuvre (55a).

2. Boîtier de régulateur (1) selon la revendication 1, **caractérisé en ce que** les rainures externes (9.1, 9.2) et les rainures internes (10.1, 10.2) ont des largeurs différentes.

3. Boîtier de régulateur (1) selon une des revendications 1 ou 2, **caractérisé en ce qu'à** la pièce de jonction (8), les premiers moyens d'entraînement (11.1, 11.2) du sous-ensemble inférieur (5b) correspondant aux rainures internes (10.1, 10.2) et/ou les deuxièmes moyens d'entraînement (12.1, 12.2) du sous-ensemble supérieur (5a) correspondant aux rainures externes (9.1, 9.2) ont des largeurs différentes.

4. Boîtier de régulateur (1) selon une des revendications 1 à 3, **caractérisé en ce que** les rainures externes (9.1, 9.2) aussi bien que les rainures internes (10.1, 10.2) et les premiers et deuxièmes moyens d'entraînement (11.1, 11.2; 12.1, 12.2) associés sont décalés les uns par rapport aux autres par 180°.

5. Boîtier de régulateur (1) selon une des revendications 1 à 4, **caractérisé en ce que** dans le sous-ensemble inférieur (5b) s'engageant dans les rainures internes (10.1, 10.2) de la pièce de jonction (8), le capteur de position (13) du thermostat (5) dépendant de la température et l'anneau d'ajustage (14) prévu pour l'orientation d'une échelle de valeurs de consigne de la partie de manœuvre (55a) à un état de dilatation du capteur de position (13) est intégré, et le sous-ensemble supérieur (5a) s'engageant dans les rainures externes (9.1, 9.2) de la pièce de jonction (8) est réalisé par la partie de manœuvre (55a) du thermostat (5) et la cache (3).

6. Boîtier de régulateur (1) selon une des revendications 1 à 5, **caractérisé en ce que** les premiers moyens d'entraînement (11.1, 11.2) guidés dans les rainures internes (10.1, 10.2) de la pièce de jonction (8) réalisent une partie de l'anneau d'ajustage (14).

7. Boîtier de régulateur (1) selon une des revendications 1 à 6, **caractérisé en ce que** l'anneau d'ajustage (14) comporte des éléments de retenue (17) pour la pièce de jonction (8), pour que pour l'ajustage, d'un côté, la position de la pièce de jonction (8) par rapport à l'anneau d'ajustage (14) après l'assemblage de ceux-ci soit fixée en rotation, et de l'autre côté, la pièce de jonction (8) ne puisse pas être enlevée de l'anneau d'ajustage (14).

8. Boîtier de régulateur (1) selon une des revendications 1 à 7, **caractérisé en ce que,** lorsque le sous-ensemble supérieur et le sous-ensemble inférieur (5a, 5b) sont montés, l'orientation de la cache (3) du sous-ensemble supérieur (5a) avec une surface de la paroi (7) est permise par des portées de guidage latérales (18) à la cache (3) qui s'engagent dans des ouvertures de réception (23) au boîtier (2) pour l'encastrement dans une paroi, c'est-à-dire une rotation des pièces par rapport à l'axe de rotation (15) du thermostat (5) aussi bien qu'un ajustage de la profondeur de la cache (3) par rapport au boîtier (2) pour l'encastrement dans une paroi, la position de la partie de manœuvre (55a) dans l'ouverture de réception (19) de la cache (3) n'étant pas modifiée dans la direction axiale.
